Europäisches Patentamt

European Patent Office

Office européen des brevets

(11) Publication number: **0 523 238 A1**

## EUROPEAN PATENT APPLICATION
### published in accordance with Art. 158(3) EPC

(21) Application number: 92901872.9

(22) Date of filing: 27.12.91

(86) International application number:
PCT/JP91/01795

(87) International publication number:
WO 92/11766 (23.07.92 92/19)

(51) Int. Cl.⁵: **A21D 2/34**, A21D 2/32, A21D 2/16

(30) Priority: 28.12.90 JP 408807/90

(43) Date of publication of application:
20.01.93 Bulletin 93/03

(84) Designated Contracting States:
AT BE CH DE DK ES FR GB GR IT LI LU MC NL SE

(71) Applicant: KYOWA HAKKO KOGYO KABUSHIKI KAISHA
6-1, Ohte-machi 1-chome
Chiyoda-ku Tokyo 100(JP)

(72) Inventor: KAWAGUCHI, Yoshifumi 25-127,
Suzuki Ami-machi
Inashiki-gun
Ibaraki 300-03(JP)
Inventor: HIROSE, Haruo 1-14-16, Chuo
Ami-machi
Inashiki-gun Ibaraki 300-03(JP)
Inventor: YOSHIDA, Kazumasa 21-9,
Shiroyame Kukizaki-cho
Inshiki-gun
Ibaraki 300-12(JP)
Inventor: INOUE, Seijiro 4047-3, Ami
Ami-machi
Inashiki-gun
Ibaraki 300-03(JP)
Inventor: TORIGOE, Takaoki 5-8-9, Matsuba
Ryugasaki-shi
Ibaraki 301(JP)

(74) Representative: Lambert, Hugh Richmond et al
D. YOUNG & CO. 10 Staple Inn
London, WC1V 7RD(GB)

(54) **DOUGH IMPROVER.**

(57) An improver for dough and baking containing either (A) at least one member selected between gelatin and an emulsifier comprising enzyme lecithin and fatty acid glycerol ester or (B) a conjugate of gelatin with the emulsifier. The improver serves to solve the problems of frozen dough which has been proved, such as insufficient volume, and poor palatability and taste caused by poor expansion of dough in an oven and failure in baking, thus making possible the production of bread excellent in voluminousness, appearance, textrure, palatability and taste.

## Technical Field

The present invention relates to improvers for dough and bread. The improvers for dough and bread of the present invention are useful for improving oven spring which is poor when frozen dough, especially dough frozen after proofing is used and for preparing excellent bread with good volume.

## Background Art

Many reports have been made on methods for the improvement of dough and bread quality. Among them, methods using additives are easily applicable. In particular, utilization of frozen dough has been increasing in recent years but involves some problems remaining unsolved.

In general, breadmaking process comprises the steps of mixing of dough ingredients, primary fermentation, dividing, bench time, molding, secondary fermentation (proofing) and baking. In the case of frozen dough, freezing is generally carried out after dividing or molding the dough prior to proofing in the above process for the purpose of immediately stopping or discontinuing fermentation of yeast, in view of freezing injury. That is, frozen dough is generally stored as divided frozen dough or as molded frozen dough and is thawed and subjected to final fermentation (proofing), followed by baking to obtain bread.

In divided frozen dough and molded frozen dough, freezing injury to yeast such as injury to cell membrane or death of cells by freezing occurs to cause reduction in gas generation. By freezing dough, physical properties of the dough change by denaturation of protein, destruction of gluten structure, etc. As the result, gas retention decreases, and the obtained bread does not have enough volume. To solve this problem in breadmaking using such frozen dough, various methods are employed in which an amount of yeast added is increased, dough is made at a low temperature below 20°C or primary fermentation is carried out for a very short time. However, these methods only give bread of poor flavor since the fermentation time is short.

On the other hand, dough frozen after proofing is prepared by freezing a sufficiently fermented dough, and hence, the flavor of bread is improved and the dough can be directly baked without the thawing step and the fermentation step. However, bread obtained from frozen dough, especially dough frozen after proofing, by conventional techniques according to the straight dough method or the sponge-dough method does not have sufficient volume because of less oven spring, shrinking after baking, etc. Furthermore, only bread having unsatisfactory quality in respect of crumb structure, appearance, texture, etc. is provided.

As for dough improvers, a bread improver comprising as the main component an emulsifying composition of calcium stearoyl lactylate and gelatin is known (Japanese Published Unexamined Patent Application No. 3547/78). The publication teaches that the improver can improve water dispersibility but is silent about frozen dough.

## Disclosure of the Invention

The present invention relates to improvers for dough and bread which comprise gelatin and at least one emulsifier selected from enzyme-degraded lecithin and a glycerine fatty acid ester, and also to improvers for dough and bread which comprise a complex of gelatin and said emulsifier.

The present invention also relates to dough which contains said improver and a method for making bread using the dough.

According to the present invention, a bread product with a larger volume can be obtained by using the improver for dough and bread which comprises the complex of gelatin and the emulsifier, as compared with the product obtained by using the improver for dough and bread comprising gelatin and the emulsifier.

These improvers may be added in any of the steps for preparing dough, but are generally added when ingredients such as flour and yeast are kneaded in the first step.

Gelatin having a molecular weight of 5,000 to 300,000 and a jelly strength of 50 bloom or more, preferably 100 to 300 bloom, which is obtained by hydrolysis of collagen protein from the skin, bone, tendon, etc. of animals such as cow and pig, may be used as the gelatin. Such gelatin is commercially available and readily accessible.

Examples of the enzymatically degraded lecithin include lecithin decomposed with phospholipase A (main component: lysolecithin), lecithin decomposed with phospholipase D (main component: phosphatidic acid), and lecithin decomposed with phospholipase A and D (main component: lysophosphatidic acid).

Examples of the glycerine fatty acid ester include diacetyltartaric acid ester of monoglyceride, succinic acid ester of monoglyceride, and monoglyceride. The term monoglyceride is used to mean an ester obtained by ester linkage of only one out of the 3 hydroxy groups of glycerine with a saturated or unsaturated fatty acid having 16 to 22 carbon atoms. Gelatin and the emulsifier may be independently added to flour, but in general, gelatin and the emulsifier are mixed (e.g., 50 to 300 rpm; 1 to 20 minutes) with a mixer conventionally used (e.g., Hobart mixer) before addition.

Gelatin and the emulsifier are used in the ratio of 55-95 : 45-5, preferably 60-80 : 40-20 (parts by weight/parts by weight).

The complex of gelatin and the emulsifier can be obtained by mixing the materials described above using an appropriate mixing stirrer.

In general, a composition comprising gelatin, 5 to 90 parts by weight, preferably 10 to 60 parts by weight of the emulsifier and 100 to 1200 parts by weight of water based on 100 parts by weight of gelatin is intensively mixed (50 to 200 rpm) using a mixing stirrer until visco-elasticity is lost from the composition of strongly visco-elastic doughy state. Alternatively, the composition is mixed using a homogenizer (under pressure of 50 to 300 kg/cm$^2$), etc. The thus obtained mixture is extracted with chloroform to remove free emulsifier, whereby the complex can be isolated.

Usually, the reaction mixture containing the complex or powder obtained by drying the mixture is used as the improver, without isolating the complex.

The complex content of the reaction mixture varies depending upon the kind of the emulsifier used, mixing conditions, proportion of gelatin to the emulsifier, etc.

If the proportion of the emulsifier to gelatin is small, the free emulsifier content of the reaction mixture becomes small, but the amount of the emulsifier bound to gelatin also becomes small. If the amount of the emulsifier used is increased, the amount of the emulsifier bound to gelatin increases, but at the same time, the free emulsifier content of the reaction mixture also increases. By using 50 to 80 parts by weight of the emulsifier based on 100 parts by weight of gelatin, the reaction product having a relatively high content of the complex and containing a relatively large amount of the emulsifier bound to gelatin can be obtained.

The gelatin-emulsifier ratio, reaction conditions, etc. which are most appropriate for producing the desirable improver (reaction mixture) can be determined by preparing reaction mixtures having various complex contents and binding rates of the emulsifier to gelatin and by evaluating the quality of the dough and the bread obtained by using the reaction mixtures.

The binding rate of the emulsifier to gelatin is determined in the following manner.

The reaction mixture is extracted with chloroform, whereby the amount of the free emulsifier can be determined. On the other hand, the reaction mixture is decomposed with an acid and then extracted with chloroform, whereby the total amount of the emulsifier can be determined.

The ratio of the value obtained by subtracting the amount of the free emulsifier from the total amount of the emulsifier to the total amount of the emulsifier is the binding rate.

The dough improver of the present invention is added in an amount of 0.2 to 10.0 parts by weight, preferably 0.5 to 5.0 parts by weight, based on 100 parts by weight of flour used as an ingredient of bread.

Examples of general procedures for making dough, in particular, frozen dough, using the improver of the present invention according to the straight dough method and the sponge-dough method are shown below.

Frozen dough can be prepared according to the straight dough method as follows.

The improver and water are added to the ingredients of dough such as flour, yeast, yeast food, and sugar, and the mixture is kneaded into dough. The dough is subjected to fermentation (primary fermentation) at 25 to 35°C for 40 to 120 minutes. Then, the dough is divided according to the bread to be produced and allowed to stand at 15 to 35°C for 10 to 30 minutes (bench time).

After bench time, the dough pieces were molded, put into pans and subjected to secondary fermentation (proofing) at 30 to 45°C until they rise to a predetermined height. Then, the fermented product is frozen at -30 to -40°C for 15 to 40 minutes to obtain frozen dough.

Frozen dough can be prepared by the sponge-dough method as follows.

The improver of the present invention and water are added to the ingredients of sponge such as flour, yeast, and yeast food, and the resulting mixture is kneaded into a sponge, followed by fermentation at 25 to 35°C for 100 to 150 minutes (sponge fermentation). The fermented sponge is mixed with the dough mix mostly comprising flour and sugar and to the mixture is added water. The resulting mixture is kneaded into dough and the dough is subjected to fermentation at 25 to 35°C for 40 to 120 minutes (primary fermentation). Then, the dough is treated in the same manner as in the straight dough method to obtain frozen dough.

The dough improver of the present invention is applicable to dough for pullman bread, sweet bread, butter roll, croissant, doughnut, etc.

The frozen dough described above is baked at 180 to 240°C for 10 to 30 minutes to prepare bread.

Best Mode for Carrying Out the Invention

Examples and test examples are shown below.

Example 1

Cold water-soluble gelatin WS-150 (gelatin manufactured by Kyowa Hakko Kogyo Co., Ltd., 350 g) was mixed with 150 g each of ELMIZER AC [manufactured by Kyowa Hakko Kogyo Co., Ltd.; lecithin (powder) decomposed by phospholipase A], MIGHTY SOFT (manufactured by Koyo Shokai; monoglyceride], RAMEJIN DW-9000 (manufactured by Nichieisha; diacetyltartaric acid ester of monoglyceride) and STEP SS (manufactured by Kao; succinic acid ester of monoglyceride), respectively, by stirring using a wire whipper of Hobart mixer model N-150 (manufactured by Bokusui Koekisha) at the velocity of 1 (126 rpm) for 2 minutes and then at the velocity of 2 (212 rpm) for 3 minutes to obtain 500 g each of mixtures (binding rate: 0%).

Example 2

Four hundred grams each of Gelatin U (manufactured by Nitta Gelatin Co.; gelatin having a jelly strength of 0 bloom), Gelatin S-750 (manufactured by Kyokuyou Chemical Industry Co., Ltd.; gelatin having a jelly strength of 64 bloom), cold water-soluble gelatin WS-150 (manufactured by Kyowa Hakko Kogyo Co., Ltd.; gelatin having a jelly strength of 160 bloom) and Gelatin CLV 300 (manufactured by Nitta Gelatin Co.; gelatin having a jelly strength of 300 bloom) were respectively mixed with 100 g of ELMIZER AC by stirring using Hobart mixer in the same manner as in Example 1 to obtain 500 g each of mixtures (binding rate: 0%).

Example 3

Cold water-soluble gelatin WS-150 (350 g), 75 g of ELMIZER AC and 75 g of POEM B-10 (manufactured by Riken Vitamin Co.; succinic acid ester of monoglyceride) were mixed by stirring using Hobart mixer in the same manner as in Example 1 to obtain 500 g of a mixture (binding rate: 0%).

Example 4

Cold water-soluble gelatin WS-150 (300 g) and 150 g of ELMIZER A [manufactured by Kyowa Hakko Kogyo Co., Ltd.; lecithin (paste) decomposed by phospholipase A] were mixed by stirring for 5 minutes using a whipper in a mixer bowl of Universal Mixer (manufactured by Shinagawa Industry Co.).

Then, the whipper was replaced by a hook and 400 g of water was added to the mixture. The resulting mixture was stirred at 30-35°C at a low speed (63 rpm: hereinafter the same shall apply) for 5 minutes to form a mixture of doughy state showing a strong visco-elasticity, and then at a high speed (126 rpm: hereinafter the same shall apply) for 20 minutes. The binding reaction was completed when the mixture lost the strong visco-elasticity and became a rough paste like miso (soybean paste).

The resulting reaction mixture was freeze-dried using a vacuum freeze-drier Model RL-30 (manufactured by Kyowa Shinku Gijutsu Co.) and then ground to a powder with a small size pulverizer Model SK-M-10 (manufactured by Kyoritsu Riko Co.) to obtain 400 g of powder (binding rate: 58.6%).

Example 5

To 300 g of Gelatin KC-150 (manufactured by Nitta Gelatin Co.; gelatin) was added 400 g of water, and the mixture was allowed to stand at room temperature for 30 minutes to sufficiently swell gelatin. After 150 g of ELMIZER A was added, the mixture was heated to 60°C to completely dissolve gelatin. The obtained paste-like mixture was stirred at 30-35°C using Universal Mixer at the low speed for 5 minutes and then at the high speed for 20 minutes in the same manner as in Example 4 to effect binding reaction. The reaction was completed when the visco-elasticity of the mixture was lost.

The obtained reaction mixture was pulverized in the same manner as in Example 4 to give 400 g of powder (binding rate: 60.2%).

Example 6

4

Cold water-soluble gelatin WS-150 (400 g) was dissolved in 4,500 g of hot water at 50°C together with 40 g, 100 g, 200 g, 300 g and 400 g of ELMIZER A, respectively, and the solutions were subjected to reaction under pressure of 150 kg/cm$^2$, using Manton-Gaulin homogenizer Model 15M-8TA (manufactured by Nippon Seiki Seisakusho). The reaction mixtures were spray-dried using a spray drier Model L-12 (manufactured by Okawara Kakoki Co.) at a hot air inlet temperature of 180°C and a hot air outlet temperature of 100°C to obtain 370 g (binding rate: 100%), 440 g (binding rate: 99.6%), 540 g (binding rate: 98.5%), 620 g (binding rate: 82.6%) and 715 g (binding rate: 68.2%) of powders, respectively.

Example 7

Gelatin KC-150 (400 g) and 200 g of ELMIZER A were dissolved in 4,400 g of hot water at 50°C with stirring, and the reaction was carried out in the same manner as in Example 6 using a homogenizer. The reaction mixture was spray-dried in the same manner as in Example 6 using a spray drier to give 540 g of powder (binding rate: 97.4%).

Example 8

Gelatin KC-150 (400 g) and 200 g of POEM W-10 (manufactured by Riken Vitamin Co.; diacetyltartaric acid ester of monoglyceride) were dissolved in 4,400 g of hot water at 50°C with stirring, and the reaction was carried out in the same manner as in Example 6 using a homogenizer. The reaction mixture was spray-dried in the same manner as in Example 6 using a spray drier to give 540 g of powder (binding rate: 48.2%).

Example 9

Gelatin CLV-300 (manufactured by Nitta Gelatin Co.) (400 g) and 200 g of ELMIZER A were dissolved in 4,400 g of hot water at 50°C with stirring, and the reaction was carried out in the same manner as in Example 6 using a homogenizer. The reaction mixture was spray-dried in the same manner as in Example 6 using a spray drier to give 540 g of powder (binding rate: 97.1%).

Example 10

Gelatin U (manufactured by Nitta Gelatin Co.) (400 g) and 200 g of ELMIZER A were dissolved in 4,400 g of hot water at 50°C with stirring, and the reaction was carried out in the same manner as in Example 6 using a homogenizer. The reaction mixture was spray-dried in the same manner as in Example 6 using a spray drier to give 500 g of powder (binding rate: 72.7%).

In the following test examples, the quality of bread produced from dough prepared using the improvers obtained in the examples was evaluated.

The specific volume of bread was determined by the rapeseed displacement method in the test examples.

Test Example 1

To the bread ingredients indicated in Table 1 was added 1.5 parts by weight of the mixture (dough improver) obtained in Example 1, and sweet bread was prepared according to the breadmaking steps shown in Table 1.

As controls, sweet bread was prepared by the same procedure as described above except that no dough improver was added, and also by the same procedure except that gelatin, enzyme-degraded lecithin and monoglyceride were added singly in place of the dough improver mentioned above.

The amounts of gelatin, enzyme-degraded lecithin and monoglyceride added singly correspond to the amounts of them contained in the dough improver obtained in Example 1, respectively.

The specific volume of the sweet bread obtained is shown in Table 2.

Table 1

Bread Ingredients

| | | |
|---|---|---|
| Hard wheat flour | 100.0 | parts by weight |
| Yeast | 3.0 | " |
| * Yeast food | 0.1 | " |
| Salt | 0.8 | " |
| Sugar | 25.0 | " |
| Shortening | 10.0 | " |
| Skim milk powder | 2.0 | " |
| Whole egg | 10.0 | " |
| Water | suitable amount | |

Breadmaking Steps

Mixing [low speed (100 rpm; hereinafter the same
      shall apply), 3 minutes; medium low speed
      (190 rpm: hereinafter the same shall apply),
      7 minutes; medium high speed (290 rpm,
      hereinafter the same shall apply), 6 minutes]

      Dough temperature (20°C)
Primary fermentation
      (room temperature, 60 minutes)

Dividing (60 g)

Bench time (room temperature, 20 minutes)

Molding

Secondary fermentation (proofing)
      (38°C, 45-50 minutes, 85% RH)

Freezing (-35°C, 20 minutes)

Storage (-20°C, 3 weeks)

Baking (200°C, 12 minutes)

(* containing L-ascorbic acid)

Table 2

| | Example 1 | | Control | | | |
|---|---|---|---|---|---|---|
| Gelatin (part by wt) | 1.05 | 1.05 | - | 1.05 | - | - |
| Enzyme-degraded lecithin (part by wt) | 0.45 | - | - | - | 0.45 | - |
| Monoglyceride (part by wt) | - | 0.45 | - | - | - | 0.45 |
| Specific volume (ml/g) | 5.35 | 5.10 | 4.30 | 4.95 | 4.65 | 4.45 |

As is apparent from the table, the sweet bread prepared using the dough improvers obtained in Example 1 was superior to the controls in specific volume.

Test Example 2

To the bread ingredients indicated in Table 3 was added 1.0 part by weight of the mixture (dough improver) obtained in Example 1, and butter rolls were prepared according to the breadmaking steps shown in Table 3.

As a control, butter rolls were prepared by the same procedure as described above except that calcium stearoyl lactylate (CSL) was added in place of the dough improver mentioned above.

The specific volume of the butter rolls obtained is shown in Table 4.

### Table 3
### Bread Ingredients

| | | |
|---|---|---|
| Hard wheat flour | 90.0 parts by weight | |
| Soft wheat flour | 10.0 | " |
| Yeast | 4.0 | " |
| * Yeast food | 0.1 | " |
| Salt | 1.8 | " |
| Sugar | 12.0 | " |
| Fresh butter | 15.0 | " |
| Skim milk powder | 2.0 | " |
| Whole egg | 15.0 | " |
| Water | suitable amount | |

### Breadmaking Steps

Mixing (low speed, 3 minutes;
        medium low speed, 7 minutes;
        medium high speed, 6 minutes)

↓      Dough temperature (20°C)

Primary fermentation

↓

Dividing (40 g)

↓

Bench time (25°C, 30 minutes)

↓

Molding

↓

Proofing  (38°C, 45 minutes, 85% RH)

↓

Freezing (-35°C, 20 minutes)

↓

Storage (-20°C, 3 weeks)

↓

Baking (200°C, 12 minutes)

(*containing L-ascorbic acid)

Table 4

| | Example 1 | | | | Control |
|---|---|---|---|---|---|
| Gelatin (part by wt) | 0.7 | 0.7 | 0.7 | 0.7 | - |
| Enzyme-degraded lecithin (part by wt) | 0.3 | - | - | - | - |
| Monoglyceride (part by wt) | - | 0.3 | - | - | - |
| Diacetyltartaric acid ester of monoglyceride (part by wt) | - | - | 0.3 | - | - |
| Succinic acid ester of monoglyceride (part by wt) | - | - | - | 0.3 | - |
| CSL (part by wt) | - | - | - | - | 0.3 |
| Specific volume (ml/g) | 5.00 | 4.75 | 4.85 | 4.85 | 4.40 |

As is apparent from the table, the butter rolls prepared using the dough improvers obtained in Example 1 were superior to the control in specific volume.

Test Example 3

To the bread ingredients indicated in Table 3 was added 1.5 parts by weight of the mixture (dough improver) obtained in Example 2, and butter rolls were prepared according to the breadmaking steps shown in Table 3.

As a control, butter rolls were prepared by the same procedure as described above except that no dough improver was added.

The specific volume of the butter rolls obtained is shown in Table 5.

Table 5

| | Example 2 | | | | Control |
|---|---|---|---|---|---|
| Jelly strength of gelatin (bloom) | 0 | 64 | 160 | 300 | - |
| Specific volume (ml/g) | 4.20 | 4.70 | 5.05 | 5.10 | 3.80 |

As is apparent from the table, the butter rolls prepared using the dough improvers obtained in Example 2 were excellent in specific volume.

Test Example 4

To the bread ingredients indicated in Table 6 were added 0.5, 1.0, 2.0 and 2.5 parts by weight of the mixture (dough improver) obtained in Example 3, respectively, and croissants were prepared according to the breadmaking steps shown in Table 6.

As a control, croissants were prepared by the same procedure as described above except that no dough improver was added.

The specific volume of the croissants obtained is shown in Table 7 together with the result of evaluation of the quality.

### Table 6
#### Bread Ingredients

| | | |
|---|---|---|
| Hard wheat flour | 100.0 parts by weight | |
| Yeast | 6.0 | " |
| * Yeast food | 0.1 | " |
| Salt | 1.5 | " |
| Sugar | 12.0 | " |
| Shortening | 5.0 | " |
| Skim milk powder | 2.0 | " |
| Water | suitable amount | |
| Roll-in fats | 30 parts by weight based on 100 parts by weight of the dough | |

#### Breadmaking Steps

Mixing (low speed, 3 minutes;
     medium low speed, 7 minutes;
     medium high speed, 6 minutes)

↓   Dough temperature (20°C)

Primary fermentation (25°C, 60 minutes)

↓

Roll-in (24 layers)

↓

Molding

↓

Proofing (32°C, 90 minutes, 75% RH)

↓

Freezing (-35°C, 30 minutes)

↓

Storage (-20°C, 3 weeks)

↓

Baking (200°C, 15 minutes)

(*containing L-ascorbic acid)

Table 7

| | Example 3 | | | | | Control |
|---|---|---|---|---|---|---|
| Dough improver (part by weight) | 0.5 | 1.0 | 1.5 | 2.0 | 2.5 | - |
| Specific volume (ml/g) | 5.80 | 6.05 | 6.40 | 6.45 | 6.35 | 4.80 |
| Quality of product | | | | | | |
| Appearance | 4 | 5 | 5 | 5 | 5 | 2 |
| Crumb structure | 4 | 5 | 5 | 5 | 5 | 2 |
| Flavor | 5 | 5 | 5 | 4 | 4 | 2 |
| Texture | 5 | 5 | 5 | 5 | 4 | 2 |

In Table 7, the highest point in the evaluation of the quality of croissants is 5 points.

As is apparent from the table, the croissants prepared using the dough improvers obtained in Example 3 were excellent in specific volume, appearance, crumb structure, flavor and texture.

Test Example 5

To the bread ingredients indicated in Table 3 [the amount of water added (part by weight) is shown in Table 8] were added 1.5 parts by weight of (i) the powder (dough improver) obtained in Example 4, (ii) the powder (dough improver) obtained in Example 5, and (iii) gelatin and enzyme-degraded lecithin, respectively, and butter rolls were prepared according to the breadmaking steps shown in Table 3.

As controls, butter rolls were prepared by the same procedure as described above except that no dough improver was added, and also by the same procedure except that gelatin and enzyme-degraded lecithin were added singly.

The specific volume of the butter rolls obtained is shown in Table 8.

Table 8

| | Example 4 | Example 5 | | Control | | |
|---|---|---|---|---|---|---|
| Gelatin (part by weight) | - | - | 1.0 | - | 1.0 | - |
| Enzyme-degraded lecithin (part by weight) | - | - | 0.5 | - | - | 0.5 |
| Powder (part by weight) | 1.5 | 1.5 | - | - | - | - |
| Water (part by weight) | 46 | 46 | 46 | 44 | 46 | 44 |
| Specific volume (ml/g) | 5.46 | 5.53 | 4.90 | 4.01 | 4.60 | 4.40 |

As is apparent from the table, the butter rolls prepared using the dough improvers obtained in Examples 4 and 5 and a combination of gelatin and enzyme-degraded lecithin were superior to the controls in specific volume.

Test Example 6

To the bread ingredients indicated in Table 3 [the amount of water added (part by weight) is shown in Table 9] were added the powder obtained in Example 6 using 400 g of gelatin and 200 g of enzyme-degraded lecithin, and the mixture obtained in Example 1 using 350 g of gelatin and 150 g of enzyme-degraded lecithin, respectively. Butter rolls were prepared according to the breadmaking steps shown in Table 3.

As a control, butter rolls were prepared by the same procedure as described above except that calcium stearoyl lactylate (CSL) was used.

The specific volume of the butter rolls obtained is shown in Table 9.

Table 9

|  | Example 6 |  | Control |
|---|---|---|---|
| Gelatin (part by weight) | - | 0.7 | - |
| Enzyme-degraded lecithin (part by weight) | - | 0.3 | - |
| Powder (part by weight) | 1.5 | - | - |
| Calcium stearoyl lactylate (part by weight) | - | - | 0.3 |
| Water (part by weight) | 45 | 45 | 44 |
| Specific volume (ml/g) | 5.40 | 5.00 | 4.40 |

As is apparent from the table, the butter rolls prepared using the powder of Example 6 and gelatin and enzyme-degraded lecithin were superior to the control in specific volume.

Test Example 7

To the bread ingredients indicated in Table 10 were added 1.5 parts by weight of the powders obtained in Examples 7 and 8, respectively, and sweet bread was prepared by the breadmaking steps according to the sponge dough method shown in Table 10.

As a control, sweet bread was prepared by the same procedure as described above except that no powder was added, and also by the same procedure except that diacetyltartaric acid ester of monoglyceride alone was added.

The specific volume of the sweet bread obtained is shown in Table 11 together with the result of evaluation of the quality.

## Table 10

### Bread Ingredients

Sponge ingredients:

| | |
|---|---|
| Hard wheat flour | 70.0 parts by weight |
| Yeast | 3.0 " |
| * Yeast food | 0.1 " |
| Sugar | 5.0 " |
| Water | 41.0 " |

Dough ingredients:

| | |
|---|---|
| Hard wheat flour | 30.0 parts by weight |
| Sugar | 20.0 " |
| Salt | 0.8 " |
| Skim milk powder | 2.0 " |
| Shortening | 5.0 " |
| Whole egg | 10.0 " |
| Water | (shown in Table 11) |

(*containing L-ascorbic acid)

Breadmaking Steps

Mixing (low speed, 2 minutes;
        medium low speed, 3 minutes)

        Sponge temperature (24°C)

(fermentation) (28°C, 120 minutes)

Mixing (low speed, 3 minutes;
        medium low speed, 7 minutes;
        medium high speed, 2 minutes)

        Dough temperature (20°C)

Primary fermentation (room temperature, 30 minutes)

Dividing  (60 g)

Bench time (room temperature, 20 minutes)

Molding

Proofing  (38°C, 45 minutes, 85% RH)

Freezing (-35°C, 20 minutes)

Storage (-20°C, 3 weeks)

Baking (200°C, 12 minutes)

## Table 11

|  | Example 7 | Example 8 | Control | |
|---|---|---|---|---|
| Powder (part by weight) | 1.5 | 1.5 | – | – |
| Diacetyltartaric acid ester of monoglyceride (part by weight) | – | – | – | 0.5 |
| Water (part by weight) | 7 | 7 | 6 | 6 |
| Specific volume (ml/g) | 5.63 | 5.48 | 4.60 | 4.72 |
| Quality of product |  |  |  |  |
| Appearance | 5 | 5 | 3 | 3 |
| Crumb structure | 5 | 5 | 3 | 3 |
| Flavor | 5 | 5 | 3 | 3 |
| Texture | 5 | 5 | 3 | 3 |

In Table 11, the highest point in the evaluation of the quality of sweet bread is 5 points.

As is apparent from the table, the sweet bread prepared using the powders obtained in Examples 7 and 8 was superior to the controls in specific volume, appearance, crumb structure, flavor and texture.

Test Example 8

To the bread ingredients indicated in Table 12 were added 1.5 parts by weight of the powders obtained in Examples 9 and 10, respectively, and croissants were prepared according to the breadmaking steps shown in Table 12.

As a control, croissants were prepared by the same procedure as described above except that vital gluten and a commercially available dough improver were added.

The specific volume of the croissants obtained is shown in Table 13 together with the result of evaluation of the quality.

## Table 12

### Bread Ingredients

| | |
|---|---|
| Hard wheat flour | 100.0 parts by weight |
| * Yeast food | 0.1 " |
| Yeast | 6.0 " |
| Salt | 1.5 " |
| Sugar | 12.0 " |
| Shortening | 5.0 " |
| Skim milk powder | 2.0 " |
| Water | (shown in Table 13) |
| Roll-in margarine | 30 parts by weight based on 100 parts by weight of the dough |

(*containing L-ascorbic acid)

### Breadmaking Steps

Mixing (low speed, 3 minutes;
medium low speed, 7 minutes;
medium high speed, 3 minutes)

Dough temperature (20°C)
Primary fermentation (20°C, 60 minutes)

Roll-in (24 layers)

Molding

Proofing (32°C, 90 minutes, 75% RH)

Freezing (-35°C, 30 minutes)

Storage (-20°C, 3 weeks)

Baking (200°C, 15 minutes)

Table 13

|  | Example 9 | Example 10 | Control |
|---|---|---|---|
| Powder (part by weight) | 1.5 | 1.5 | - |
| Vital gluten (part by weight) | - | - | 2.0 |
| Commercially available improver (part by weight) | - | - | 2.0 |
| Water (part by weight) | 60 | 60 | 61 |
| Specific volume (ml/g) | 6.8 | 6.1 | 5.8 |
| Quality of product |  |  |  |
|    Appearance | 5 | 4 | 5 |
|    Crumb structure | 5 | 4 | 4 |
|    Flavor | 5 | 5 | 3 |
|    Texture | 5 | 5 | 3 |
| Dough properties | Dough shows good extensibility and is little shrunk. | Dough is somewhat weak in toughness. | Dough shows strong elasticity and is shrunk. |

In Table 13, the highest point in the evaluation of the quality of croissants is 5 points.

As is apparent from the table, the croissants prepared using the powders obtained in Examples 9 and 10 were superior to the control in specific volume, flavor and texture.

## Claims

1. An improver for dough and bread comprising (A) gelatin and at least one emulsifier selected from the group consisting of enzyme-degraded lecithin and a glycerine fatty acid ester, or (B) a complex of gelatin and at least one emulsifier selected from the group consisting of enzyme-degraded lecithin and a glycerine fatty acid ester.

2. An improver according to claim 1, wherein said glycerine fatty acid ester is diacetyltartaric acid ester of monoglyceride, succinic acid ester of monoglyceride or monoglyceride.

3. An improver according to claim 1, which contains 55 to 95 parts by weight of gelatin and 45 to 5 parts by weight of the emulsifier.

4. An improver according to claim 1, wherein said improver is a mixture of gelatin and the degradation product of lecithin by phospholipase A.

5. An improver according to claim 1, wherein said improver is a reaction mixture obtained by allowing the degradation product of lecithin by phospholipase A to react with gelatin.

6. A dough containing an improver for dough and bread according to claim 1.

7. A dough according to claim 6, wherein said dough is frozen.

8. A bread dough obtained by kneading wheat flour, yeast, additives for breadmaking and an improver according to claim 1.

9. A bread obtained by baking a dough according to claim 6 in a conventional manner.

# INTERNATIONAL SEARCH REPORT

International Application No  PCT/JP91/01795

## I. CLASSIFICATION OF SUBJECT MATTER (if several classification symbols apply, indicate all) *

According to International Patent Classification (IPC) or to both National Classification and IPC

Int. Cl$^5$  A21D2/34, 2/32, 2/16

## II. FIELDS SEARCHED

| Minimum Documentation Searched * | |
|---|---|
| Classification System | Classification Symbols |
| IPC | A21D2/08-36 |

| Documentation Searched other than Minimum Documentation to the Extent that such Documents are Included in the Fields Searched * |
|---|
| |

## III. DOCUMENTS CONSIDERED TO BE RELEVANT *

| Category * | Citation of Document, ¹¹ with indication, where appropriate, of the relevant passages ¹² | Relevant to Claim No. ¹³ |
|---|---|---|
| X/Y | JP, A, 53-3547 (Riken Vitaminyu K.K.), January 13, 1978 (13. 01. 78), (Family: none) | 1-3, 6-9/4, 5 |
| X/Y | JP, A, 54-95748 (Dai-ichi Kogyo Se.yaku Co., Ltd.), July 28, 1979 (28. 07. 79), (Family: none) | 1-3, 6-9/4, 5 |
| Y/A | JP, A, 1-112942 (Kao Corp.), May 1, 1989 (01. 05. 89), (Family: none) | 4, 5/1-3, 6-9 |
| Y/A | JP, A, 58-51853 (Kyowa Hakko Kogyo Co., Ltd.), March 26, 1983 (26. 03. 83), & EP, A2, 75463 & US, A, 4478866 | 4, 5/1-3, 6-9 |
| Y/A | JP, A, 59-88040 (Kyowa Hakko Kogyo Co., Ltd.), May 21, 1984 (21. 05. 84), & EP, A1, 109244 & US, A, 4567046 | 4, 5/1-3, 6-9 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 9, 1992 (09. 03. 92) | March 31, 1992 (31. 03. 92) |
| International Searching Authority | Signature of Authorized Officer |
| Japanese Patent Office | |

Form PCT/ISA/210 (second sheet) (January 1985)